# EUROPEAN PATENT SPECIFICATION

(11) **EP 4 118 947 B1**
(45) Date of publication and mention of the grant of the patent: **23.08.2023**
(21) Application number: 21186068.9
(22) Date of filing: 16.07.2021
(51) Int. Cl.: A01D 46/247, B25J 1/04

(54) **HAND-HELD DEVICE**
TRAGBARE VORRICHTUNG
DISPOSITIF PORTATIF

(43) Date of publication of application: 18.01.2023
(73) Proprietor: Husqvarna AB, 561 82 Huskvarna (SE)
(72) Inventor: Kohl, Peter, 89257 Illertissen (DE)
(74) Representative: Finkele, Rolf

(56) References cited:
- CN-A- 110 831 513
- CN-U- 205 835 286
- US-A1- 2010 102 583
- US-A1- 2016 001 442

## Description

### TECHNICAL FIELD

The present disclosure relates to a hand-held device.

### BACKGROUND

Hand-held devices such as grippers, commonly include a jaw portion i.e., an actuator, and a handle. The jaw portion/actuator and the handle are spaced apart by a longitudinal member located between them. The hand-held devices are generally used for picking up and gripping objects that are generally disposed beyond the reach of a user. Further, the hand-held devices are available with an adjustable-length. The adjustable-length of the hand-held devices are used to precisely adjust the length of the hand-held device, for instance, to reach relatively far objects. Particularly, some objects may need an extended length of the hand-held device whereas objects that are near may require a shorter length of the hand-held device.

However, conventional length adjustable mechanisms present in the known art includes a number of heavier components made up of metals. Further, these components are expensive and includes a complex locking mechanism which increases the difficulties in adjusting length of the hand-held device. Moreover, these heavier components may increase weight of the hand-held device which reduces their ergonomics and universal applicability. Thus, an improved, cost effective hand-held device is needed which includes lighter components and better ergonomics.

An example of a shutter slat cleaning accessory is provided in U. S. Patent Application Number US 2010/102583 A1 (hereinafter referred to as '583 reference). The '583 reference discloses a hand-held reacher, including a jaw portion having a pair of jaws movable relative to each other between fully clamped and fully opened positions thereof. Further, a handle portion is spaced apart from the jaw portion by a selectively extendible central portion. The handle portion includes a manually-actuatable trigger operatively connected to the jaw portion by a selectively extendible pull member at least substantially disposed within the central portion. Actuation of the trigger is operative to move the pull member to position the pair of jaws thereby selectively between the fully clamped and fully opened position thereof. The selectively extendible central portion includes a first tubular member slidingly longitudinally received within a second tubular member, a first coupling for selectively fixing the relative positions of the first and second tubular members, and a second coupling for selectively fixing the length of the pull member. In order to fix the relative positions of the first and second tubular members, there is provided a collet assembly. The second coupling provides a first, engaged condition in which the length of the pull member is fixed, and a second, disengaged condition in which the length of the pull member may be varied. However, the '583 reference includes a complex collet assembly for locking the length of the hand-held reacher which is not desirable. Further, the present reference seems to rely on need of additional release and fixation of the collet assembly.

### SUMMARY

In view of the above, it is an objective of the present disclosure to solve or at least reduce the drawbacks discussed above. The objective is at least partially achieved by a hand-held device. The hand-held device includes a first portion. The first portion includes a handle. The first portion also includes a trigger operatively coupled with the handle. The trigger allows actuation of the hand-held device. The first portion further includes a first tube defining a central axis. The hand-held device also includes second portion. The second portion includes a second tube co-axial with the central axis. The second tube being partly inserted into the first tube and being allowed to telescope in and out of the same. The second portion also includes one or more actuators to be actuated by the trigger. The hand-held device further includes a mechanism. The mechanism includes an adaptor having a first end and a second end and being adapted to slide longitudinally, inside the second tube, along the central axis. The first end of the adapter being connected to the actuators via a cable. The mechanism also includes a rack in cooperation with the trigger adapted to enter the adaptor at its second end and to slide longitudinally, inside the adaptor, along the central axis. The mechanism further includes a second lock rotatably coupled to the adaptor. The second lock has a plurality of second engaging elements and the rack has third engaging elements, such that the second engaging elements cooperate with third engaging elements to selectively engage therewith. The hand-held device is characterized in that the second lock has protrusions and/or detents at its outer side that interact with related protrusions and/or indents on an inner side of the second tube to fix them relative to each other during rotation. The inner side of the first tube has a plurality of first engaging elements. The second tube has a plurality of fourth engaging elements, such that the first engaging elements cooperate with the fourth engaging elements so that they selectively engage. Further, the cooperating second and third engagement elements and the cooperating first and fourth engagement elements are arranged such that the engagement and disengagement of the second lock with the rack, and the inner side of the first tube with the second tube is synchronized.

Thus, the present disclosure provides an improved hand-held device for picking up and gripping objects that are disposed beyond the reach of a user, effectively and efficiently. The mechanism of the hand-held device allows to precisely adjust a length of the hand-device. Further, the components of the mechanism are made up of a relatively lighter material (such as plastic) which allows the hand-held device to be light in weight and cost effective. Furthermore, the light weight of the hand-held device improves the ergonomics of the hand-held device. Moreover, a simple construction of the hand-held device allows ease in locking and unlocking of the hand-held device. Additionally, the protrusions and/or detents of the second lock engage with the protrusions and/or detents of the second tube to restrict the relative motion therebetween.

According to an embodiment of the present disclosure, the first portion and the second portion slide longitudinally along the central axis to switch between a first position and a second position. The sliding motion of the first portion and the second portion allows adjustment of the length of the hand-held device.

According to an embodiment of the present disclosure, the first portion is rotated about a first angle with respect to the second portion to switch between the locked position and the unlocked position. The first angle depends upon a number (say a single row, one pair or multiple pairs) of the fourth engaging element. The rotation of the first portion with respect to the second portion allows simultaneous locking and unlocking of the first lock and the second lock after adjusting the length of the hand-held device.

According to an embodiment of the present disclosure, the first portion further includes a first lock. The first lock includes the first engaging elements. The first engaging elements on the first lock allow engagement of the first portion with the second portion.

According to an embodiment of the present disclosure, the actuator includes one or more of a gripper, a scissor, a pruner, and a pincer. Such choice of the actuator allows the hand-held device to perform one or more gardening operations such as trimming, pruning, cutting, gripping, and the like.

According to an embodiment of the present disclosure, a cable is fixedly coupled between the mechanism and the one or more of the gripper, the scissor, the pruner, and the pincer. The disposition of the cable allows actuation of one or more of the gripper, the scissor, the pruner, and the pincer to perform one or more of trimming, pruning, cutting, gripping, and the like.

According to an embodiment of the present disclosure, the handle is rotatable relative to the first portion. The relative rotation between the handle and the first portion allows easy and quick locking and unlocking of the hand-held device.

According to an embodiment of the present disclosure, the first angle is selected from the group consisting of 90, 120, 360 degrees. This arrangement may be achieved by incorporating different numbers or pairs, as per the requirement, of fourth engaging element which indicates a simple construction of the hand-held device.

Other features and aspects of this disclosure will be apparent from the following description and the accompanying drawings.

### BRIEF DESCRIPTION OF THE DRAWINGS

The disclosure will be described in more detail with reference to the enclosed drawings, wherein:
**FIG. 1A** illustrates a side view of a hand-held device in a first position according to an embodiment of the present disclosure;
**FIG. 1B** illustrates a side view of the hand-held device in a second position, according to an embodiment of the present disclosure;
**FIG. 2A** illustrates a side view of the hand-held device in a first, unlocked position, according to an embodiment of the present disclosure;
**FIG. 2B** illustrates a side view of the hand-held device in a second, unlocked position, according to an embodiment of the present disclosure;
**FIG. 2C** illustrates a perspective view of a safety arrangement in an engaged position, for a hand-held device, according to an embodiment of the present disclosure;
**FIG. 2D** illustrates a perspective view of the safety arrangement in a disengaged position, for the hand-held device, according to an embodiment of the present disclosure;
**FIG. 2E** illustrates a perspective view of the safety arrangement in an engaged position, for a hand-held device, according to an embodiment of the present disclosure;
**FIG. 2F** illustrates a perspective view of the safety arrangement in a disengaged position, for the hand-held device, according to an embodiment of the present disclosure;
**FIG. 3** illustrates a partial cross-sectional view of the hand-held device about a vertical plane, according to an embodiment of the present disclosure;
**FIG. 4A** illustrates a side view of an actuator in an unactuated position, according to an embodiment of the present disclosure;
**FIG. 4B** illustrates a side view of the actuator in an actuated position, according to an embodiment of the present disclosure;
**FIG. 5** illustrates an exploded view of a mechanism, according to an embodiment of the present disclosure;
**FIG. 6A** illustrates a side view of the mechanism in the first position for a hand-held device, according to an embodiment of the present disclosure;
**FIG. 6B** illustrates a side view of the mechanism in the second position for a hand-held device, according to an embodiment of the present disclosure;
**FIG. 7A** illustrates a perspective view around the first portion in the locked position of the hand-held device, according to an embodiment of the present disclosure;
**FIG. 7B** illustrates a side view of the mechanism in the locked position of the hand-held device, according to an embodiment of the present disclosure;
**FIG. 8A** illustrates a perspective view around the first portion in the unlocked position of the hand-held device, according to an embodiment of the present disclosure; and
**FIG. 8B** illustrates a side view of the mechanism in the unlocked position of the hand-held device, according to an embodiment of the present disclosure.

### DESCRIPTION OF EMBODIMENTS

The present disclosure will be described more fully hereinafter with reference to the accompanying drawings, in which example embodiments of the disclosure incorporating one or more aspects of the present disclosure are shown. This disclosure may, however, be embodied in many different forms and should not be construed as limited to the embodiments set forth herein; rather, these embodiments are provided so that this disclosure will be thorough and complete, and will fully be covered by the scope of the appended claims. In the drawings, like numbers refer to like elements.

Certain terminology is used herein for convenience only and is not to be taken as a limitation on the disclosure. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

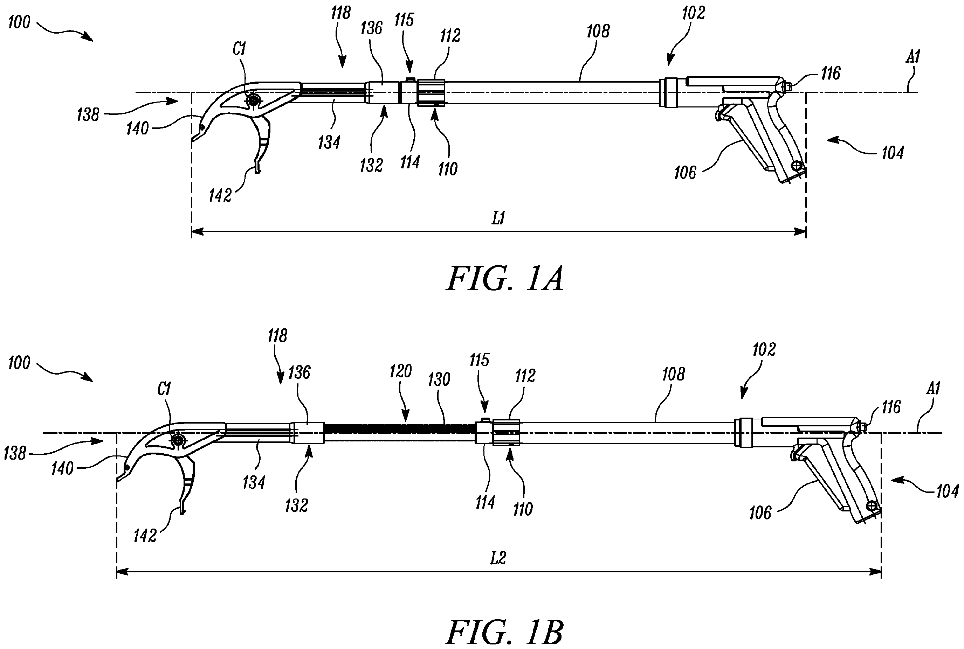

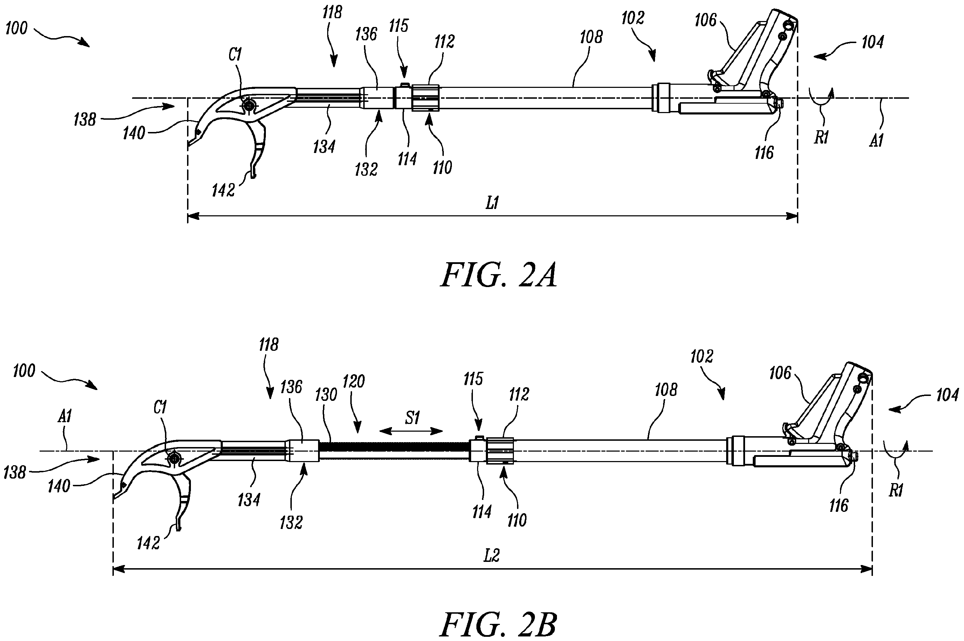

**FIGS. 1A, 1B** and **2A**, **2B** illustrate side views of a hand-held device **100.** The hand-held device **100** may be used to perform one or more gardening operations such as pruning, trimming, cutting, gripping, and the like. It should be noted that the hand-held may be used for any application, without limiting the scope of the present disclosure. The hand-held device **100** may be used for gripping objects that are disposed beyond the reach of a user. A length of the hand-held device **100** may be adjustable which allows to precisely adjust the length of the hand-device, for instance, relatively far objects may need an extended length of the hand-held device **100.** Further, objects that are near may require a shorter length of the hand-held device **100.** The hand-held device **100** may be manufactured using a light weight and durable material such as polyethylene (PE), polyvinyl chloride (PVC), polypropylene (PP), polystyrene (PS), polylactic acid (PLA), polycarbonate (PC), acrylic (PMMA), and the like. It should be noted that the hand-held device **100** may be manufactured using any material, without limiting the scope of the present disclosure.

The hand-held device **100** includes a first portion **102.** The first portion **102** includes a handle **104.** The handle **104** defines a rectangular shaped structure. The handle **104** may include any shape and size, without limiting the scope of the present disclosure. The handle **104** is ergonomically designed for holding the hand-held device **100** by the user. In one embodiment, the handle **104** is rotatable relative to the first portion **102.** In another embodiment, the handle **104** is fixedly coupled to the first portion **102.** The first portion **102** also includes a trigger **106** operatively coupled with the handle **104.** The trigger **106** allows actuation of the hand-held device **100.** The first portion **102** further includes a first tube **108** defining a central axis "**A1**". The first tube **108** is a cylindrical member. The central axis "**A1**" passes through the center of the first tube **108.**

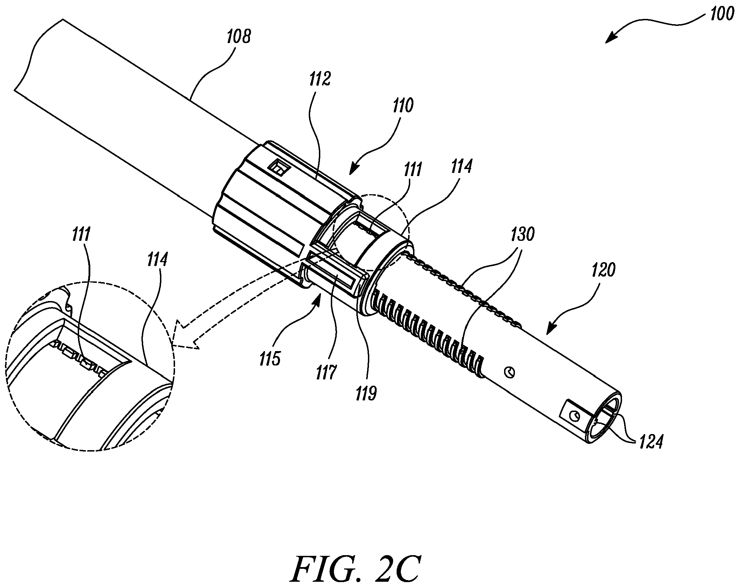

The first portion **102** also includes a first lock **110** mounted coaxially with the first tube **108.** In the illustrated embodiment, the first lock **110** includes a nut. In other embodiments, the first lock **110** may include any locking member such as a coupler, a clamp, a bolt, and the like, without limiting the scope of the present disclosure. The first lock **110** is generally disposed at or around the center of the hand-held device **100.** The first lock **110** defines a stepped cylindrical profile defining a first part **112** and a second part **114.** The first part **112** of the first lock **110** is fixedly coupled to the first tube **108.** In the illustrated embodiment, the first lock **110** has a number of first engaging elements **111** (as shown in **FIGS. 2C****,** **7A** and **8A**). Specifically, the second part **114** of the first lock **110** defines the first engaging elements **111** on an internal surface. Moreover, the first engaging elements **111** may be present on the first lock **110** in a pair to facilitate locking and unlocking of the hand-held device **100.** In some embodiment, an inner side of the first tube **108** has the plurality of first engaging elements **111.**

Referring to **FIGS. 1A, 1B** and **2A**, **2B**, in some embodiments, the first portion **102** includes a button **116.** The button **116** may allow switching between a locked position and an unlocked position of the hand-held device **100.** More specifically, pressing the button **116** may restrict the relative motion between the first portion **102** and the second portion **118** while releasing the button **116** may allow relative motion between the first portion **102** and the second portion **118.**

The hand-held device **100** also includes the second portion **118.** The second portion **118** includes a second tube **120** co-axial with the central axis "**A1**". The second tube **120** is a cylindrical member. The central axis "**A1**" passes through a center of the second tube **120.** The second tube **120** may have rotational motion with respect to the first tube **108** (see **FIGS. 2A** and **2B**). The second tube **120** has a plurality of fourth engaging elements **130,** such that the first engaging elements **111** cooperate with the fourth engaging elements **130** so that they selectively engage. Further, the cooperating second and third engagement elements **170, 190** and the cooperating first and fourth engagement elements **111, 130** are arranged such that the engagement and disengagement of the second lock **160** with the rack **180,** and the inner side of the first tube **108** with the second tube **120** is synchronized.

In some embodiments, the cooperating second and third engagement elements **170, 190** and the cooperating first and fourth engagement elements **111, 130** are arranged such that the engagement and disengagement of the second lock **160** with the rack **180,** and the first lock **110** with the second tube **120** is synchronized. The second tube **120** being partly inserted into the first tube **108** and being allowed to telescope in and out of the same. The second tube **120** has a number of fourth engaging elements **130,** such that the first engaging elements **111** selectively engage with the fourth engaging elements **130.** More particularly, the second tube **120** defines the fourth engaging elements **130** on an outer surface of the second tube **120** along the length of the second tube **120.** Moreover, the fourth engaging elements **130** may be present on the second tube **120** in different numbers or pairs (or any number, type, arrangement of the fourth engaging elements **130**) to facilitate locking and unlocking of the hand-held device **100.** The second portion **118** also includes a connecting part **132.** The connecting part **132** defines a first end **134** and a second end **136.** The first end **134** is fixedly coupled to the second tube **120.**

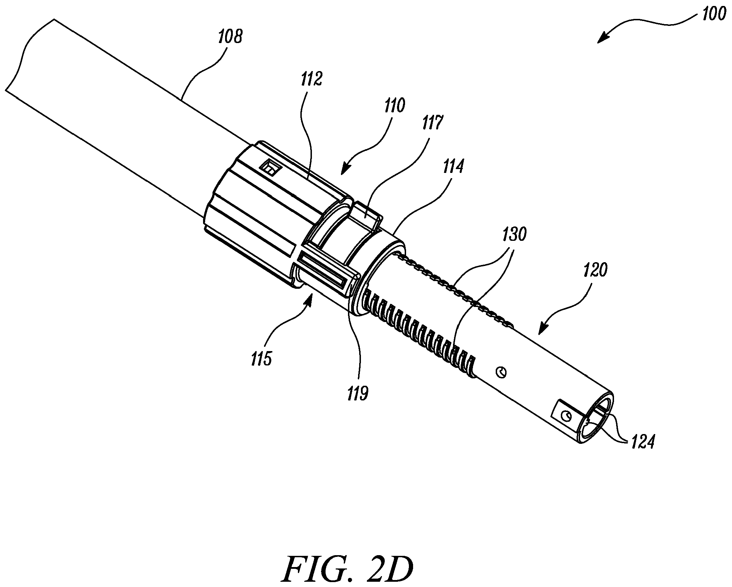

Referring to **FIGS. 2C** and **2D**, the first lock **110** includes a safety arrangement **115.** In some embodiments, the safety arrangement **115** includes a protrusion **117** and a protrusion slot **119.** The safety arrangement **115** may be manufactured using a flexible material. The safety arrangement **115** prevent an inadvertently rotation "**R1**" of the first portion **102** and (i.e., with respect to) the second portion **118.** The protrusion **117** engages with the protrusion slot **119** (as shown in **FIG. 2C**) to prevent the rotation "**R1**" of the first portion **102** and the second portion **118.** Further, the protrusion **117** may be pushed or pulled to operatively engage with the protrusion slot **119** for preventing or allowing the rotation "**R1**" of the first portion **102** and the second portion **118.** **FIG. 2D** shows a disengaged position of the protrusion **117**, which is disengaged from the protrusion slot **119** herein.

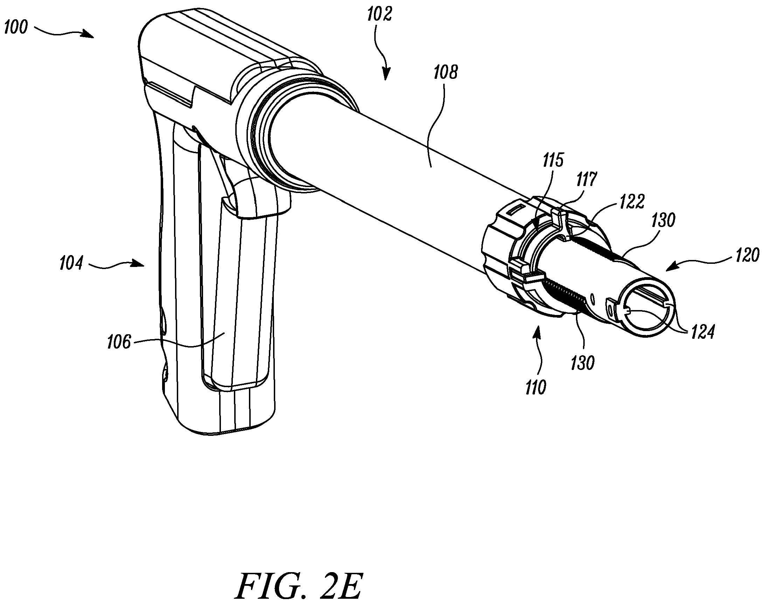

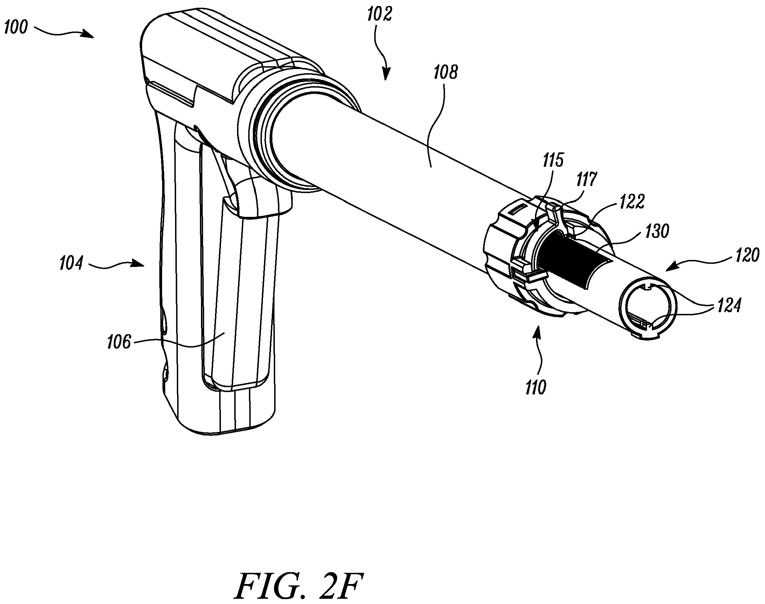

**FIGS. 2E** and **2F** show, in some embodiments, the safety arrangement **115** which includes the protrusion **117** and a protrusion tooth **122.** The protrusion tooth **122** is provided with and actuable (to engage with the second tube **120**) by engaging with the protrusion **117.** The protrusion tooth **122** removably engages with the number of fourth engaging elements **130** of the second tube **120.** The safety arrangement **115** may be manufactured using a flexible material. The safety arrangement **115** prevent an inadvertent rotation "**R1**" of the first portion **102** and (or with) the second portion **118.** The protrusion **117** may be pulled to engage or disengage the protrusion tooth **122** with the fourth engaging elements **130** of the second tube **120.** When the protrusion tooth **122** is engaged with the fourth engaging elements **130** (as shown in **FIG. 2E**), the first portion **102** and the second portion **118** do not rotate with respect to each other. Further, when the protrusion tooth **122** is disengaged with the fourth engaging elements **130** (as shown in **FIG. 2F**), the first portion **102** and the second portion **118** may rotate with respect to each other. The second tube **120** defines one or more protrusions and/or detents **124** on internal surface.

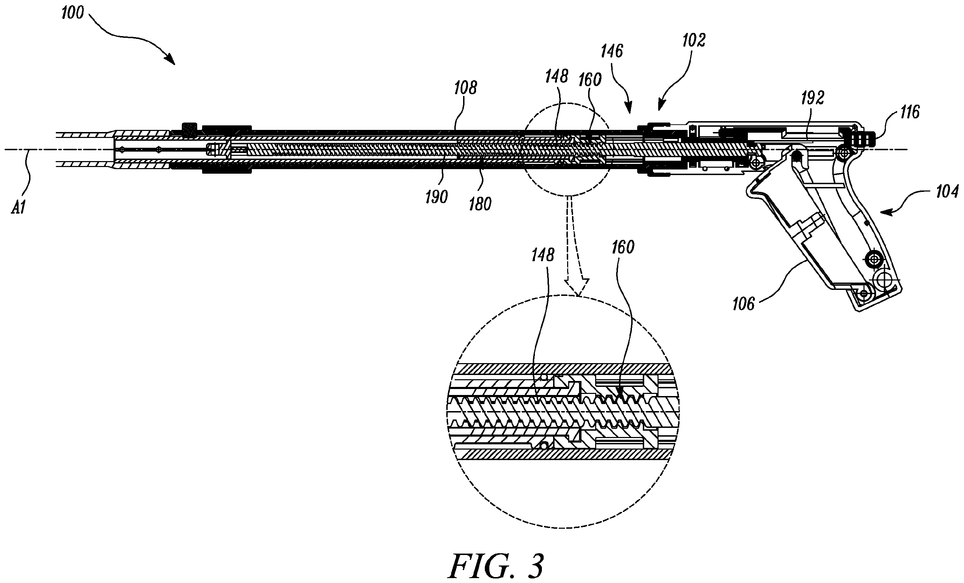

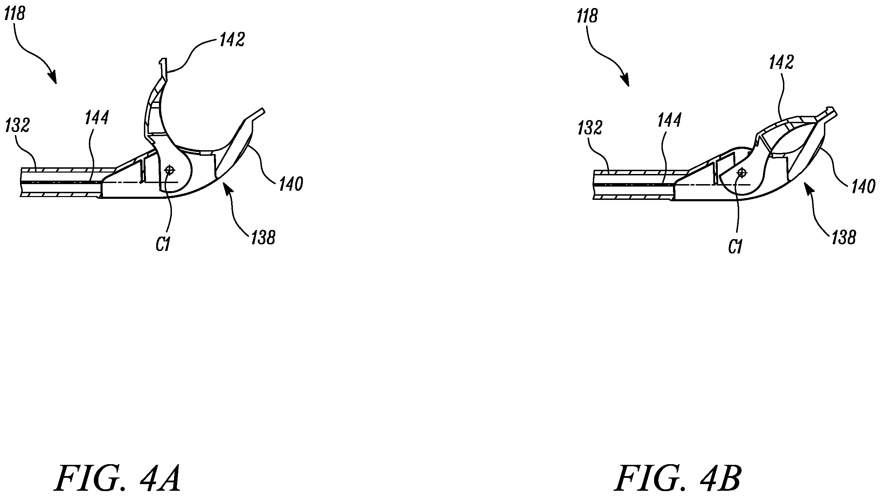

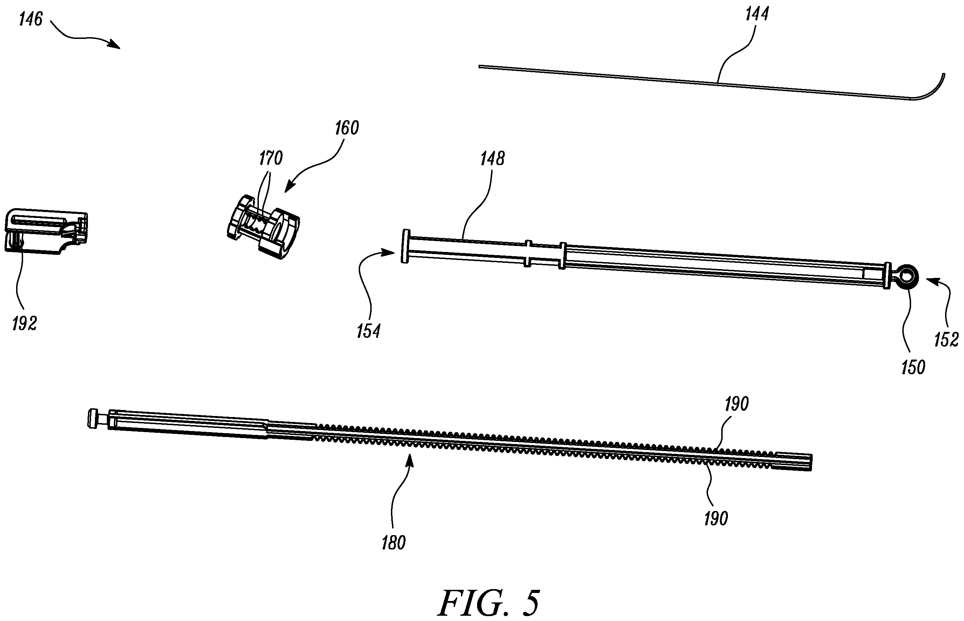

Referring to **FIGS. 3****,** **4A** and **4B****,** the second portion **118** further includes one or more actuators **138** actuated by the trigger **106.** The actuators **138** is disposed opposite to the handle **104.** The actuators **138** include a first member **140** fixedly coupled to the second end **136** of connecting part **132.** The actuators **138** also include a second member **142** actuating about a center point "**C1**" (say a pivot point) with respect to the first member **140.** The actuators **138** may include one or more of a gripper, a scissor, a pruner, and a pincer. The one or more of the gripper, the scissor, the pruner, and the pincer allow the hand-held device **100** to perform one or more gardening operations such as trimming, pruning, cutting, gripping, and the like. Further, a cable **144** is fixedly coupled between a mechanism **146** (shown in **FIG. 5**) and the one or more of the gripper, the scissor, the pruner, and the pincer. The cable **144** allows actuation of the actuators **138.** More particularly, the cable **144** may allow actuation of one or more of the gripper, the scissor, the pruner, and the pincer to perform one or more of trimming, pruning, cutting, gripping, and the like.

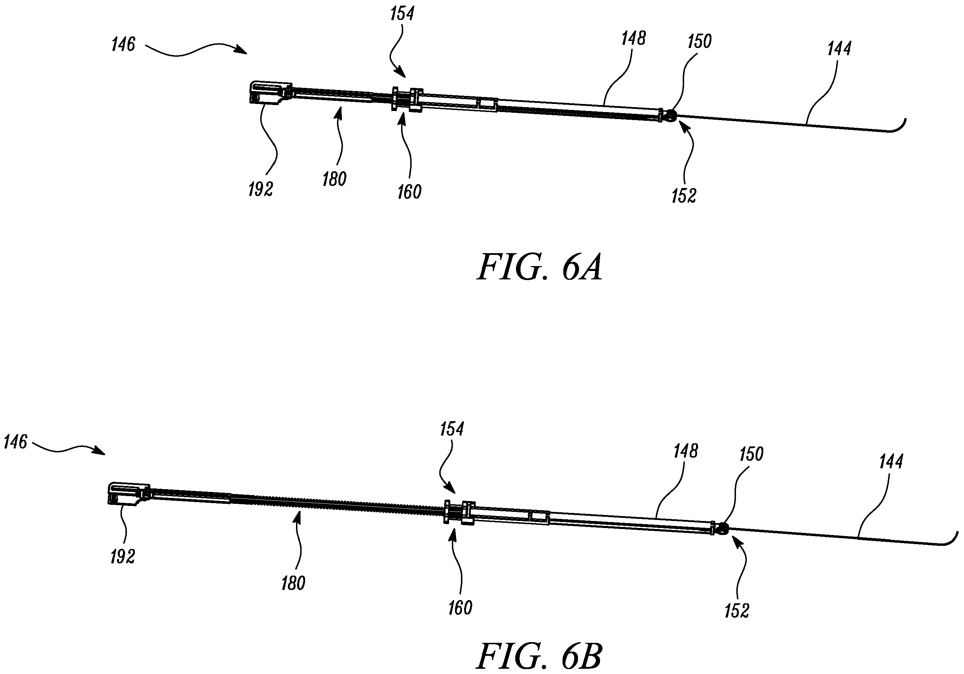

Referring to **FIGS. 3** and **5****,** the hand-held device **100** further includes the mechanism **146.** The mechanism **146** includes an adaptor **148** having a first end **152** and a second end **154** and being adapted to slide "**S1**" longitudinally, inside the second tube **120,** along the central axis "**A1**". The first end **152** of the adapter **148** being connected to the actuators **138** via the cable **144** (as shown in **FIGS. 6A** and **6B**). The adaptor **148** defines an internal cavity. The adaptor **148** includes an eye portion **150.** The mechanism **146** also includes the cable **144** fixedly coupled to the eye portion **150.** The mechanism **146** further includes a second lock **160** rotatably coupled to the adaptor **148.** The second lock **160** has a number of second engaging elements **170** and the rack **180** has third engaging elements **190,** such that the second engaging elements **170** cooperate with third engaging elements **190** to selectively engage therewith. The second lock **160** defines a hollow stepped cylindrical profile. The second lock **160** is disposed opposite to the eye portion **150** of the adaptor **148.** The second lock **160** defining a second engaging elements **170.** In some embodiments, the second engaging elements **170** may be one or more of a teeth, tines, jaws, saw-tooths and the like, or any other engaging feature as used or known in the art. More particularly, the second lock **160** defines the second engaging elements **170** on an internal surface of the second lock **160.** The second lock **160** has protrusions and/or detents **156** at its outer side that interact with related protrusions and/or indents **124** on the inner side of the second tube **120** to fix the two of them relative to each other during rotation. The second lock **160** defines one or more protrusions and/or detents **156** on its external surface.

The mechanism **146** includes a rack **180** in cooperation with the trigger **106** adapted to enter the adaptor **148** at its second end **154** and to slide "**S1**" longitudinally, inside the adaptor **148,** along the central axis "**A1**" (see **FIGS. 6A** and **6B**). The rack **180** is a solid elongated member which slides inside the internal cavity of the adaptor **148.** The rack **180** may have rotational motion with respect to the adaptor **148.** The rack **180** defining a third engaging elements **190** (say teeth, tines, jaws, saw-tooths and the like in some embodiments), such that the second engaging elements **170** selectively engages with the third engaging elements **190.** The mechanism **146** also includes a slider **192.** The slider **192** defines a rectangular profile. At one end, the rack **180** is fixedly (or removably) coupled to the slider **192.** Further, the slider **192** is operatively engaged with the trigger **106** such that actuation of the trigger **106** allows sliding motion of the slider **192** along the central axis "**A1**". The sliding motion of the slider **192** allows sliding motion of the rack **180,** within the adaptor **148,** which in turn creates a pull at the cable **144** for actuation of the actuators **138,** as illustrated by **FIGS. 6A** and **6B****.** This allows to change between a first length "**L1**", and a second length "**L2**" of the hand-held device **100** as illustrated in **FIGS. 1A** and **1B****.**

As shown in **FIGS. 3****,** **5****,** when the trigger **106** is actuated by the user, the slider **192** slides along the central axis "**A1**". As the slider **192** is fixedly coupled to the rack **180,** the rack **180** starts moving longitudinally along the central axis "**A1**". The sliding motion of the rack **180** allows the adaptor **148** to slide along the central axis "**A1**" as the second engaging elements **170** of the second lock **160** is engaged with the third engaging elements **190** of the rack **180.** Further, as the cable **144** is fixedly coupled to the eye portion **150** of the rack **148,** the cable **144** pulls the first member **140** of the actuator **138.**

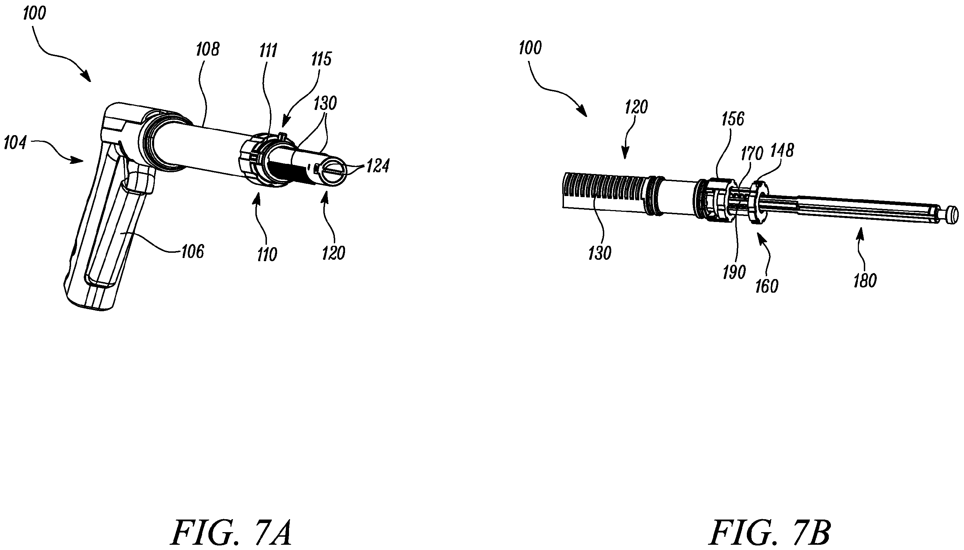

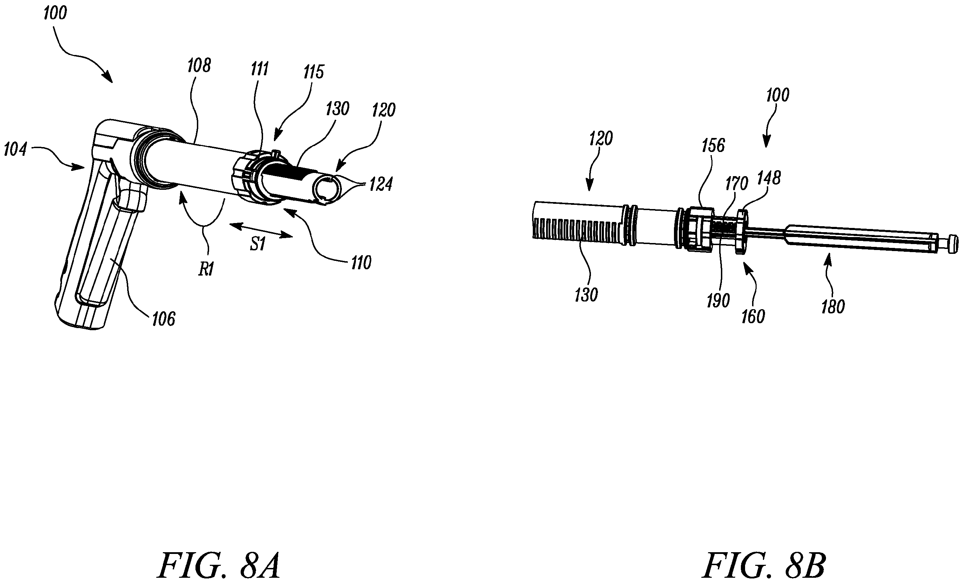

Referring to **FIGS. 7A, 7B** to **8A, 8B,** the rotation "**R1**" (shown in **FIG. 8A**) of the first portion **102** with respect to the second portion **118** allows switching between the locked position and the unlocked position of the first lock **110** with the second tube **120,** and the second lock **160** with the rack **180.** **FIGS. 7A** and **7B** show the locked position of the hand-held device **100.** Referring to **FIG. 7A****,** in the locked position, the first engaging elements **111** of the first lock **110** selectively engage with the fourth engaging elements **130** of the second tube **120.** Referring now to **FIG. 7B****,** the second engaging elements **170** of the second lock **160** selectively engages with the third engaging elements **190** of the rack **180.**

Referring to **FIGS. 8A** and **8B****,** the first portion **102** is rotated about a first angle "**X1**" (or any other desired angle as per the application) with respect to the second portion **118** to switch between the locked position and the unlocked position. The first angle "**X1**" may depend upon a number of the fourth engaging element **130.** In some embodiments, the first angle "**X1**" is selected from the group consisting of 90, 120, 360 degrees, depending upon the second tube **120** including a pair, 3 rows, or a single row, respectively, of the fourth engaging element **130.** This provides different rows of the fourth engaging element **130** to have different value of the first angle "**X1**" which may have any value such as 45 degrees, 270 degrees or others as would be evident. In some embodiments, the first angle "**X1**" may include any value depending upon different number (say pairs), types, arrangements of the fourth engaging element **130.** As the first portion **102** of the hand-held device **100** is rotated about 90 degrees (or any other angle in some embodiments) in clockwise direction with respect to the second portion **118,** the first engaging elements **111** of the first lock **110** disengage from the fourth engaging elements **130** of the second tube **120** (as shown in **FIG. 8A**), and the second engaging elements **170** of the second lock **160** disengages with the third engaging elements **190** of the rack **180** (as shown in **FIG. 8B**).

In the unlocked position of the hand-held device **100,** the length of the hand-held device **100** may be adjusted by sliding the first tube **108** of the first portion **102** with respect to the second tube **120** of the second portion **118** longitudinally along the central axis "**A1**", as per application requirement. The first portion **102** and the second portion **118** slide "**S1**" (shown in **FIG. 8A**) longitudinally along the central axis "**A1**" to switch between a first position (see **FIG. 1A**) and a second position (see **FIG. 1B**). The sliding of the first portion **102** and the second portion **118** allows telescoping i.e., change in length between the first length "**L1**", and the second length "**L2**" of the hand-held device **100.** Further, the first position defines the first length "**L1**", and the second length "**L2**" (see **FIGS. 1A** and **1B**). Specifically, the second tube **120** slides "**S1**" longitudinally in the first tube **108** along the central axis "**A1**". Such unlocking allows the slider **192** of the mechanism **146** to slide the rack **180,** within the adaptor **148,** as illustrated by **FIGS. 6A** and **6B** to allow change between the first length "**L1**", and the second length "**L2**" of the hand-held device **100.** The sliding of the rack **180,** within and with respect to the adaptor **148** leads to relative motion and movement between the first tube **108** and the second tube **120** to allow adjustment of length of the hand-held device **100,** as per application requirement.

Moreover, after adjusting length of the hand-held device **100,** the hand-held device **100** can be locked by rotating the first portion **102** about 90 degrees in counter-clockwise direction with respect to the second portion **118.** Again, in the locked position, the first engaging elements **111** of the first lock **110** selectively engage with the fourth engaging elements **130** of the second tube **120** (see **FIG. 7A**), and the second engaging elements **170** of the second lock **160** selectively engages with the third engaging elements **190** of the rack **180** (see **FIG. 7B**).

The present disclosure provides the improved hand-held device **100** for picking up and gripping objects that are disposed beyond the reach of a user. The hand-held device **100** allows the user to perform one or more gardening operations effectively and efficiently. The mechanism **146** of the hand-held device **100** allows to precisely adjust the length of the hand- held device **100.** Further, the present disclosure provides components of the mechanism **146** which are made up of a relatively lighter material such as plastic which allows the hand-held device **100** to be light in weight and cost effective. Furthermore, the light weight of the hand-held device **100** improves the ergonomics of the hand-held device **100.** Moreover, a simple construction of the hand-held device **100** allows ease in locking and unlocking of the hand-held device **100.** The hand-held device **100** disclosed in the present disclosure replaces complex, and conventional locking mechanism(s) with the mechanism **146** of the present disclosure having the first lock **110** and the second lock **160.** The first lock **110** and the second lock **160** allows locking and unlocking of the hand-held device **100** simultaneously in a simple, convenient, and user-friendly manner. Additionally, the hand-held device **100** provides the safety arrangement **115** which allows to prevent inadvertent rotation "**R1**" of the first portion **102** and the second portion **118** making the telescoping of the hand-held device **100** reliable, robust, and user-friendly. Additionally, the protrusions and/or detents **156** of the second lock **160** engage with the protrusions and/or detents **124** of the second tube **120** to restrict the relative motion therebetween.

In the drawings and specification, there have been disclosed preferred embodiments and examples of the disclosure and, although specific terms are employed, they are used in a generic and descriptive sense only and not for the purpose of limitation of the scope of the disclosure being set forth in the following claims.

### LIST OF ELEMENTS

- **100**: Hand-Held Device
- **102**: First Portion
- **104**: Handle
- **106**: Trigger
- **108**: First Tube
- **110**: First Lock
- **111**: First Engaging Elements
- **112**: First Part
- **114**: Second Part
- **115**: Safety Arrangement
- **116**: Button
- **117**: Protrusion
- **118**: Second Portion
- **119**: Protrusion Slot
- **120**: Second Tube
- **122**: Protrusion Tooth
- **124**: Protrusions and/or Detents of Second Tube
- **130**: Fourth Engaging Elements
- **132**: Connecting Part
- **134**: First Part of Connecting Part
- **136**: Second Part of Connecting Part
- **138**: Actuator
- **140**: First Member
- **142**: Second Member
- **144**: Cable
- **146**: Mechanism
- **148**: Adaptor
- **150**: Eye Portion
- **152**: First End of Adaptor
- **154**: Second End of Adaptor
- **156**: Protrusions and/or Detents of Second Lock
- **160**: Second Lock
- **170**: Second Engaging Elements
- **180**: Rack
- **190**: Third Engaging Elements
- **192**: Slider
- **A1**: Central Axis
- **C1**: Center Point
- **R1**: Rotation of First Part with Respect to Second Part
- **S1**: Sliding of First Part with Respect to Second Part
- **L1**: First Length of Hand-Held Device
- **L2**: Second Length of Hand-Held Device
- **X1**: First Angle

## Claims

1. A hand-held device (**100**), comprising:
a first portion (**102**) including:
a handle (**104**);
a trigger (**106**) operatively coupled with the handle (**104**), wherein the trigger (**106**) allows actuation of the hand-held device (**100**); and
a first tube (**108**) defining a central axis ("**A1**");
a second portion (**118**) including:
a second tube (**120**) co-axial with the central axis ("**A1**"), wherein the second tube (**120**) being partly inserted into the first tube (**108**) and being allowed to telescope in and out of the same;
and
one or more actuators (**138**) configured to be actuated by the trigger (**106**); and
a mechanism (**146**), including:
an adaptor (**148**) having a first end (**152**) and a second end (**154**) and being adapted to slide ("**S1**") longitudinally, inside the second tube (**120**), along the central axis ("**A1**"), wherein the first end (**152**) of the adapter being connected to the actuators via a cable (**144**);
a rack (**180**) in cooperation with the trigger (**106**) adapted to enter the adaptor (**148**) at its second end (**154**) and to slide ("**S1**") longitudinally, inside the adaptor (**148**), along the central axis ("**A1**"); and
a second lock (**160**) rotatably coupled to the adaptor (**148**), wherein the second lock (**160**) has a plurality of second engaging elements (**170**) and the rack (**180**) has third engaging elements (**190**), such that the second engaging elements (**170**) cooperate with the third engaging elements (**190**) to selectively engage therewith;
**characterized in that:**
wherein the second lock (**160**) has protrusions and/or detents (**156**) at its outer side that interact with related protrusions and/or indents (**124**) on an inner side of the second tube (**120**) to fix them relative to each other during rotation;
the inner side of the first tube (**108**) has a plurality of first engaging elements (**111**);
the second tube (**120**) has a plurality of fourth engaging elements (**130**), such that the first engaging elements (**111**) cooperate with the fourth engaging elements (**130**) so that they selectively engage,
whereby the cooperating second and third engagement elements (**170**, **190**) and the cooperating first and fourth engagement elements (**111**, **130**) are arranged such that the engagement and disengagement of the second lock (**160**) with the rack (**180**), and the inner side of the first tube (**108**) with the second tube (**120**) is synchronized.

2. The hand-held device (**100**) of claim 1, wherein the first portion (**102**) and the second portion (**118**) slide ("**S1**") longitudinally along the central axis ("**A1**") to switch between a first position and a second position.

3. The hand-held device (**100**) of claim 1, wherein the first portion (**102**) is rotated about a first angle ("**X1**") with respect to the second portion (**118**) to switch between the locked position and the unlocked position, and wherein the first angle ("**X1**") depends upon a number of rows with the fourth engaging elements (**130**).

4. The hand-held device (**100**) of claim 1, wherein the first portion (**102**) further includes a first lock (**110**), wherein the first lock (**110**) includes the first engaging elements (**111**).

5. The hand-held device (**100**) of any of the preceding claims, wherein the actuators (**138**) includes at least one of a gripper, a scissor, a pruner, and a pincer.

6. The hand-held device (**100**) of claim 5, wherein a cable (**144**) is fixedly coupled between the mechanism (**146**) and the at least one of the gripper, the scissor, the pruner, and the pincer.

7. The hand-held device (**100**) of any of the preceding claims, wherein the handle (**104**) is rotatable relative to the first portion (**102**).

8. The hand-held device (**100**) of claim 3, wherein the first angle ("**X1**") is selected from the group consisting of 90, 120, 360 degreesss.

## Patentansprüche

1. Tragbare Vorrichtung (100), aufweisend:
einen ersten Abschnitt (102) umfassend:
einen Griff (104);
einen Auslöser (106), der funktionell mit dem Griff (104) gekoppelt ist,
wobei der Auslöser (106) die Betätigung der tragbaren Vorrichtung (100) ermöglicht; und
ein erstes Rohr (108), das eine Zentralachse ("A1") definiert;
ein zweiter Abschnitt (118) umfassend:
ein zweites Rohr (120), das koaxial zur Zentralachse ("A1") verläuft,
wobei das zweite Rohr (120) teilweise in das erste Rohr (108) eingesetzt ist und sich in dieses hinein- und herausschieben lässt;
und
einen oder mehrere Aktuatoren (138), die so ausgebildet sind, dass sie durch den Auslöser (106) betätigt werden;
und einen Mechanismus (146), der Folgendes umfasst:
einen Adapter (148), der ein erstes Ende (152) und ein zweites Ende (154) hat und so ausgebildet ist, dass er in Längsrichtung innerhalb des zweiten Rohrs (120) entlang der Zentralachse ("A1") gleitet ("S1"), wobei das erste Ende (152) des Adapters über ein Kabel (144) mit den Aktuatoren verbunden ist;
einen Rahmen (180), der mit dem Auslöser (106) zusammenwirkt und so ausgelegt ist, dass er in den Adapter (148) an dessen zweitem Ende (154) eintritt und in Längsrichtung innerhalb des Adapters (148) entlang der Zentralachse ("A1") gleitet ("S1"); und
einen zweiten Verschluss (160), der drehbar mit dem Adapter (148) gekoppelt ist, wobei der zweite Verschluss (160) eine Vielzahl von zweiten Eingriffselementen (170) aufweist und der Rahmen (180) dritte Eingriffselemente (190) aufweist, so dass die zweiten Eingriffselemente (170) mit den dritten Eingriffselementen (190) zusammenwirken, um selektiv mit diesen in Eingriff zu kommen;
**dadurch gekennzeichnet, dass**:
wobei der zweite Verschluss (160) an seiner Außenseite Vorsprünge und/oder Einkerbungen (156) aufweist, die mit entsprechenden Vorsprüngen und/oder Einkerbungen (124) an einer Innenseite des zweiten Rohrs (120) zusammenwirken, um sie während der Drehung relativ zueinander zu fixieren;
die Innenseite des ersten Rohres (108) eine Vielzahl von ersten Eingriffselementen (111) aufweist;
das zweite Rohr (120) eine Vielzahl von vierten Eingriffselementen (130) aufweist, so dass die ersten Eingriffselemente (111) mit den vierten Eingriffselementen (130) so zusammenwirken, dass sie selektiv eingreifen,
wobei die zusammenwirkenden zweiten und dritten Eingriffselemente (170, 190) und die zusammenwirkenden ersten und vierten Eingriffselemente (111, 130) so angeordnet sind, dass der Eingriff und das Lösen des zweiten Verschlusses (160) mit dem Rahmen (180) und der Innenseite des ersten Rohrs (108) mit dem zweiten Rohr (120) synchronisiert sind.

2. Tragbare Vorrichtung (100) nach Anspruch 1, wobei der erste Abschnitt (102) und der zweite Abschnitt (118) in Längsrichtung entlang der Zentralachse ("A1") gleiten ("S17"), um zwischen einer ersten Position und einer zweiten Position zu wechseln.

3. Tragbare Vorrichtung (100) nach Anspruch 1, wobei der erste Abschnitt (102) um einen ersten Winkel ("X11 ") in Bezug auf den zweiten Abschnitt (118) gedreht wird, um zwischen der verriegelten Position und der entriegelten Position zu wechseln, und wobei der erste Winkel ("X1") von einer Anzahl von Reihen mit den vierten Eingriffselementen (130) abhängt.

4. Tragbare Vorrichtung (100) nach Anspruch 1, wobei der erste Abschnitt (102) ferner eine erste Verriegelung (110) aufweist, wobei die erste Verriegelung (110) die ersten Eingriffselemente (111) aufweist.

5. Tragbare Vorrichtung (100) nach einem der vorhergehenden Ansprüche, wobei der Aktuator (138) zumindest einen Greifer, eine Schere, eine Schneide und eine Zange umfasst.

6. Tragbare Vorrichtung (100) nach Anspruch 5, wobei ein Kabel (144) fest zwischen dem Mechanismus (146) und dem Greifer, der Schere, der Schneide und/oder der Zange gekoppelt ist.

7. Tragbare Vorrichtung (100) nach einem der vorhergehenden Ansprüche, wobei der Griff (104) relativ zum ersten Abschnitt (102) drehbar ist.

8. Tragbare Vorrichtung (100) nach Anspruch 3, wobei der erste Winkel ("X17") ausgewählt ist aus der Gruppe bestehend aus 90, 120, 360 Grad.

## Revendications

1. Dispositif portatif (100), comprenant :
une première partie (102) comprenant :
une poignée (104) ;
un déclencheur (106) couplé de manière opérationnelle à la poignée (104), dans lequel le déclencheur (106) permet d'actionner le dispositif portatif (100) ; et
un premier tube (108) définissant un axe central (« A1 ») ;
une seconde partie (118) comprenant :
un second tube (120) coaxial avec l'axe central (« A1 »), le second tube (120) étant partiellement inséré dans le premier tube (108) et pouvant se télescoper à l'intérieur et à l'extérieur de celui-ci ;
et
un ou plusieurs actionneurs (138) configurés pour être actionnés par le déclencheur (106) ; et
un mécanisme (146), comprenant :
un adaptateur (148) ayant une première extrémité (152) et une seconde extrémité (154) et étant adapté pour coulisser (« S1 ») longitudinalement, à l'intérieur du second tube (120), le long de l'axe central (« A1 »), la première extrémité (152) de l'adaptateur étant reliée aux actionneurs par un câble (144) ;
un support (180) en coopération avec le déclencheur (106) adapté pour entrer dans l'adaptateur (148) à sa seconde extrémité (154) et pour coulisser (« S1 ») longitudinalement, à l'intérieur de l'adaptateur (148), le long de l'axe central (« A1 ») ; et
un second verrou (160) couplé de manière rotative à l'adaptateur (148), dans lequel le second verrou (160) a une pluralité de deuxièmes éléments d'engagement (170) et le support (180) a des troisièmes éléments d'engagement (190), de sorte que les deuxièmes éléments d'engagement (170) coopèrent avec les troisièmes éléments d'engagement (190) pour s'engager sélectivement avec eux ;
**caractérisé en ce que** :
dans lequel le second verrou (160) a des saillies et/ou des crans (156) sur son côté extérieur qui interagissent avec des saillies et/ou des crans (124) sur un côté intérieur du second tube (120) pour les fixer l'un par rapport à l'autre pendant la rotation ;
le côté intérieur du premier tube (108) a une pluralité de premiers éléments d'engagement (111) ;
le second tube (120) a une pluralité de quatrièmes éléments d'engagement (130), de sorte que les premiers éléments d'engagement (111) coopèrent avec les quatrièmes éléments d'engagement (130) de manière à s'engager sélectivement,
les deuxièmes et troisièmes éléments d'engagement (170, 190) et les premiers et quatrièmes éléments d'engagement (111, 130) sont disposés de manière à synchroniser l'engagement et le désengagement du second verrou (160) avec le support (180), et le côté intérieur du premier tube (108) avec le second tube (120).

2. Dispositif portatif (100) selon la revendication 1, dans lequel la première partie (102) et la seconde partie (118) coulissent (« S1 ») longitudinalement le long de l'axe central (« A1 ») pour passer d'une première à une seconde position.

3. Dispositif portatif (100) selon la revendication 1, dans lequel la première partie (102) est tournée autour d'un premier angle (« X1 ») par rapport à la seconde partie (118) pour passer de la position verrouillée à la position déverrouillée, et dans lequel le premier angle (« X1 ») dépend d'un certain nombre de rangées avec les quatrièmes éléments d'engagement (130).

4. Dispositif portatif (100) selon la revendication 1, dans lequel la première partie (102) comprend en outre un premier verrou (110), dans lequel le premier verrou (110) comprend les premiers éléments d'engagement (111).

5. Dispositif portatif (100) selon l'une quelconque des revendications précédentes, dans lequel les actionneurs (138) comprennent au moins l'un des éléments suivants : une pince, un ciseau, un élagueur et une tenaille.

6. Dispositif portatif (100) selon la revendication 5, dans lequel un câble (144) est couplé de manière fixe entre le mécanisme (146) et au moins l'un des éléments suivants : la pince, le ciseau, l'élagueur et la tenaille.

7. Dispositif portatif (100) selon l'une quelconque des revendications précédentes, dans lequel la poignée (104) est rotative par rapport à la première partie (102).

8. Dispositif portatif (100) selon la revendication 3, dans lequel le premier angle (« X1 ») est choisi dans le groupe constitué de 90, 120, 360 degrés.
